# FASCICULE DE BREVET EUROPEEN

(11) **EP 2 267 880 B1**
(45) Date de publication et mention de la délivrance du brevet: **19.06.2013**
(21) Numéro de dépôt: 10162301.5
(22) Date de dépôt: 07.05.2010
(51) Int. Cl.: H02M 7/219, H02M 1/08, H02M 1/32

(54) **Convertisseur de puissance utilisant un redresseur à transistors normalement fermés**
Leistungswandler mit einem aus normalerweise geschlossenenTransistoren bestehenden Gleichrichter
power converter using a rectifier with normallly closed transistors

(30) Priorité: 19.05.2009 FR 0953307
(43) Date de publication de la demande: 29.12.2010
(73) Titulaire: Schneider Toshiba Inverter Europe SAS, 27120 Pacy sur Eure (FR)
(72) Inventeur: Grbovic, Petar, 27200 Vernon (FR)
(74) Mandataire: Bié, Nicolas

(56) Documents cités:
- EP-A- 1 347 564
- JP-A- 10 178 781
- JP-A- 59 123 468

## Description

La présente invention se rapporte à un convertisseur de puissance utilisant un redresseur à transistors normalement fermés. Un tel convertisseur est divulgué dans le document EP 1347564. Ledit convertisseur de puissance est destiné à être utilisé par exemple dans un variateur de vitesse, un système d'alimentation sécurisé, un filtre actif ou un convertisseur DC-DC.

Il est connu qu'un convertisseur de puissance comporte plusieurs entrées, connectées au réseau, par exemple trois entrées s'il est connecté sur un réseau triphasé. Connecté à ses entrées, le convertisseur comporte un redresseur permettant de transformer la tension alternative fournie par le réseau en une tension continue. Le convertisseur comporte également un bus d'alimentation de puissance doté d'une ligne positive et d'une ligne négative et sur lequel est appliquée la tension continue et un condensateur de bus connecté entre la ligne positive et la ligne négative du bus d'alimentation et destiné à maintenir constante la tension continue sur le bus. Dans un convertisseur de puissance de type variateur de vitesse, le convertisseur de puissance comporte plusieurs bras de commutation, en règle générale trois bras de commutation, situés en aval du condensateur de bus. Chaque bras de commutation est connecté entre la ligne positive et la ligne négative du bus d'alimentation et peut comporter par exemple deux transistors de commutation commandés pour transformer la tension continue en une tension variable à destination d'une charge électrique.

Le redresseur placé en entrée du convertisseur peut être de type actif en comportant également plusieurs bras de commutation dotés chacun d'au moins deux transistors en série. Ces transistors sont chacun commandés par un dispositif de commande de grille afin de pouvoir transformer la tension alternative du réseau en une tension continue appliquée sur le bus d'alimentation. En anglais, ce type de convertisseur avec un redresseur actif en entrée est communément appelé "Active front end". Dans ce type de redresseur, il s'est avéré intéressant d'employer des transistors à effet de champ de type normalement fermé en raison de leurs performances élevées.

Cependant, étant donné que le redresseur du convertisseur utilise des composants normalement fermés qui laissent donc passer le courant lorsqu'aucune tension n'est appliquée sur leurs grilles, il faut s'assurer que les bras de commutation portant ces composants ne viennent pas mettre en court-circuit les entrées du convertisseur et court-circuiter le condensateur de bus, empêchant la montée en tension du bus d'alimentation et le chargement du système d'alimentation auxiliaire, lorsqu'aucune tension de commande n'est applicable sur leurs grilles, c'est-à-dire :
- lors du démarrage du convertisseur de puissance alors que la tension continue sur le bus d'alimentation n'a pas encore atteint un niveau suffisant ou,
- lors d'un dysfonctionnement dans le convertisseur de puissance, par exemple dans le système d'alimentation auxiliaire.

Le but de l'invention est de proposer un convertisseur de puissance dans lequel le redresseur utilisant des transistors de type normalement fermé ne peut mettre en court-circuit les entrées du convertisseur et court-circuiter le condensateur de bus lors du démarrage du convertisseur de puissance ou lors d'un dysfonctionnement dans le convertisseur de puissance.

Ce but est atteint par un convertisseur de puissance comportant :
- plusieurs entrées connectées d'une part à une source d'énergie et d'autre part à un redresseur, ledit redresseur étant connecté à un bus d'alimentation de puissance doté d'une ligne positive et d'une ligne négative et sur lequel est appliquée une tension continue,
- un condensateur de bus, connecté en aval du redresseur entre la ligne positive et la ligne négative du bus d'alimentation,
- le redresseur comportant un bras de commutation connecté entre la ligne positive et la ligne négative du bus d'alimentation, le bras de commutation comportant au moins deux transistors connectés en série, un point milieu de connexion situé entre les deux transistors du bras de commutation étant connecté à une entrée du convertisseur, via un élément limiteur de courant,
- les transistors étant de type à effet de champ normalement fermés et commandés chacun par un dispositif de commande de grille,
caractérisé en ce que chaque dispositif de commande de grille comporte :
- une sortie connectée à la grille du transistor,
- un élément redresseur de tension connecté entre la sortie du dispositif de commande et une entrée du convertisseur, en amont de l'élément limiteur de courant,
- un condensateur connecté entre la source du transistor et un point situé entre la sortie du dispositif de commande et l'élément redresseur de tension.

Selon une particularité de l'invention, le dispositif de commande de grille comporte une résistance montée en série avec l'élément redresseur de tension.

Selon une autre particularité, le dispositif de commande de grille comporte une résistance de grille connectée entre la grille du transistor et la sortie du dispositif de commande de grille.

Selon une autre particularité, le dispositif de commande de grille comporte une diode Zener connectée entre la grille du transistor et une borne positive du dispositif de commande.

Selon une autre particularité, les transistors sont de type JFET.

Selon une autre particularité, les transistors sont fabriqués en carbure de silicium ou en nitrure de gallium.

Selon une autre particularité, le convertisseur comporte un interrupteur monté en parallèle de l'élément limiteur de courant.

Selon l'invention, l'élément limiteur de courant est par exemple une résistance et l'élément redresseur de tension est par exemple une diode.

D'autres caractéristiques et avantages vont apparaître dans la description détaillée qui suit en se référant à un mode de réalisation donné à titre d'exemple et représenté par les dessins annexés sur lesquels :
- la figure 1 représente en partie un convertisseur de puissance et plus particulièrement le redresseur actif utilisé dans le convertisseur,
- la figure 2 représente un bras de commutation utilisé dans le redresseur de la figure 1 et les dispositifs de commande des transistors du bras de commutation,
- la figure 3 représente les transistors bas du redresseur du convertisseur et un mode de réalisation particulier de l'invention,
- la figure 4 illustre de manière simplifiée la situation au démarrage du convertisseur lorsque tous les transistors du redresseur sont fermés et que les entrées du convertisseur se trouvent en court-circuit,
- la figure 5 illustre, grâce à plusieurs courbes, le fonctionnement de l'invention.

Un convertisseur de puissance est utilisable par exemple dans un variateur de vitesse, un système d'alimentation sécurisé (UPS pour "Uninterruptible Power Supply"), un filtre actif ou un convertisseur DC-DC. Il est destiné à recevoir une tension d'entrée d'une source et à appliquer une tension de sortie par exemple à une charge électrique.

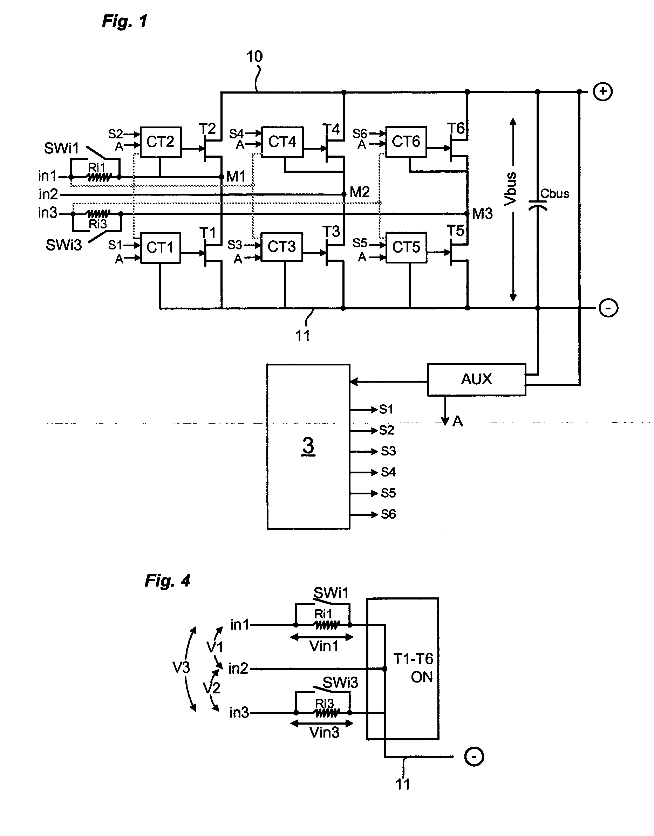

En référence à la figure 1, un convertisseur de puissance comporte typiquement un bus d'alimentation de puissance doté d'une ligne positive 10 et d'une ligne négative 11 et sur lequel est appliquée une tension continue Vbus. Le convertisseur de puissance comporte en outre un condensateur de bus Cbus connecté entre la ligne positive 10 et la ligne négative 11 du bus d'alimentation et destiné à maintenir constante la tension continue Vbus du bus d'alimentation. Un convertisseur de puissance de type variateur de vitesse comporte en outre, en aval du condensateur de bus Cbus, un module de commutation (non représenté sur la figure 1) à n phases ayant sur chaque phase 2n transistors de commutation. Le module de commutation est par exemple à trois phases et comporte donc trois bras de commutation connectés chacun entre la ligne positive 10 et la ligne négative 11 du bus d'alimentation. Chaque bras de commutation comporte un transistor haut et un transistor bas séparés par un point milieu de connexion relié à la charge électrique.

En amont du condensateur de bus Cbus, un convertisseur de puissance comporte un redresseur. Comme représenté en figure 1, le redresseur peut être actif, c'est-à-dire qu'il comporte des bras de commutation destinés à transformer en une tension continue la tension alternative appliquée sur les entrées in1, in2, in3 du convertisseur et provenant du réseau. Si le réseau est à trois phases comme sur la figure 1, le convertisseur comporte trois entrées in1, in2, in3 connectées chacune à un bras de commutation. Les trois bras de commutation du redresseur sont connectés chacun en parallèle du condensateur de bus Cbus, entre la ligne positive 10 et la ligne négative 11 du bus d'alimentation. Chaque bras de commutation comporte un transistor haut et un transistor bas séparés par un point milieu de connexion M1, M2, M3 relié à une entrée in1, in2, in3 du convertisseur.

Sur les trois entrées in1, in2, in3, au moins deux sont connectées à un bras de commutation via un circuit de précharge. Le circuit de précharge comporte un élément limiteur de courant tel que par exemple une résistance, une inductance ou un transistor de type JFET permettant de limiter le courant au démarrage du convertisseur et connecté sur l'entrée du convertisseur. Sur les figures annexées, les entrées in1 et in3 sont ainsi connectées respectivement au premier bras de commutation et au troisième bras de commutation du redresseur via les résistances Ri1 et Ri3. Chaque circuit de précharge comporte par ailleurs, en parallèle la résistance Ri1, Ri3 un interrupteur SWi1, SWi3 ouvert lors du démarrage du convertisseur et commandé à la fermeture une fois que l'alimentation auxiliaire AUX et le redresseur sont prêts à fonctionner normalement.

Selon l'invention, chaque transistor T1-T6 du redresseur est du type à effet de champ (FET pour "Field Effect Transistor") normalement fermé. Un transistor à effet de champ tel que par exemple un JFET ou un MOSFET est un interrupteur électronique de puissance connu qui comporte une Grille de commande (G) dont la fonction est d'autoriser ou non le passage d'un courant entre un Drain (D) et une Source (S). Un tel transistor est dit de type normalement fermé (ou "Normally ON") si la tension V_{GS} entre la Grille et la Source est proche de zéro. Cela signifie que le chemin Drain-Source est passant ou conducteur en l'absence de tension de commande V_{GS}. En présence d'une tension de commande V_{GS} négative entre sa grille et sa source, le transistor à effet de champ normalement fermé est commandé à l'ouverture. Un transistor de type JFET est commandé à l'ouverture en appliquant une tension grille-source V_{GS} par exemple au moins égale à -15 Volts et un transistor MOSFET avec une tension V_{GS} par exemple au moins égale à -5 Volts.

Les transistors à effet de champ employés dans le convertisseur de puissance de l'invention seront par exemple fabriqués dans un matériau à grande énergie de bande interdite (appelé également "matériau à grand gap" ou "wide-band gap material") tel que par exemple le carbure de silicium ou le nitrure de gallium. De manière connue, un transistor JFET réalisé dans un matériau à grande énergie de bande interdite et de type normalement fermé présente les avantages d'être plus rapide à commuter, de générer moins de pertes en conduction à l'état passant (faible résistance R_{DSon} à l'état passant), d'avoir une meilleure tenue en température et d'avoir une taille plus petite. Dans la suite de la description et sur les figures annexées, les transistors T1-T6 utilisés sont par exemple de type JFET.

Chaque transistor à effet de champ T1-T6 des bras de commutation est commandé à l'ouverture grâce à un dispositif spécifique de commande CT1-CT6 de grille. Chaque dispositif de commande CT1-CT6 de grille est alimenté (A) grâce à un système d'alimentation auxiliaire AUX connecté entre la ligne positive 10 et la ligne négative 11 du bus d'alimentation de puissance, en amont du condensateur de bus Cbus, et permet d'appliquer au transistor une tension de grille V_{G} pour commander le transistor à la fermeture ou à l'ouverture. En plus de l'alimentation (A), chaque dispositif de commande CT1-CT6 reçoit d'un système central de commande 3 des signaux de commande S1 à S6 à modulation de largeur d'impulsion (PWM en anglais pour "Pulse Width Modulation") respectant une loi de commande exécutée par le système central de commande 3. Chaque dispositif de commande CT2, CT4, CT6 des transistors hauts T2, T4, T6 est connecté au point milieu de connexion M1, M2, M3 du bras de commutation de son transistor tandis que chaque dispositif de commande CT1, CT3, CT5 des transistors bas T1, T3, T5 est connecté à la ligne négative 11 du bus d'alimentation de puissance.

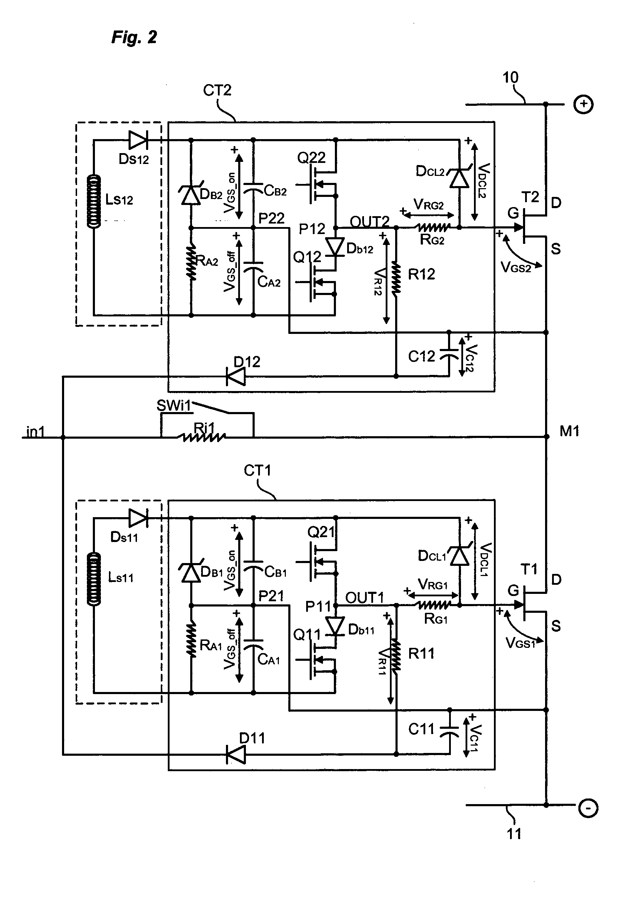

La figure 2 montre par exemple les dispositifs de commande CT1, CT2 des transistors T1, T2 du premier bras de commutation du redresseur. Les références des composants utilisés dans les dispositifs de commande non décrits ou non représentés sur les dessins sont choisies avec des notations ayant un schéma identique à celui utilisé pour la description du dispositif de commande CT1 réalisée ci-dessous.

En référence à cette figure 2, un dispositif de commande, par exemple CT1, du transistor bas T1 du redresseur comporte notamment deux transistors Q11, Q21 reliés en série et un ensemble de deux condensateurs C_{A1}, C_{B1} montés également en série. La sortie du dispositif de commande est connectée d'une part au point milieu de connexion P11 situé entre les deux transistors Q11, Q21 et d'autre part à la grille du transistor T1 commandé. Un point milieu de connexion P21 situé entre les deux condensateurs C_{A1}, C_{B1} est connecté à la source S du transistor T1. Le transistor Q11 du dispositif de commande est du type normalement fermé tandis que le transistor Q21 du dispositif de commande est du type normalement ouvert. Une diode de blocage Db11 est positionnée en série avec les transistors Q11, Q21 du dispositif de commande. Le système d'alimentation auxiliaire AUX alimente le dispositif de commande CT1 à travers une diode Ds11 et une inductance Ls11 qui constitue le secondaire du transformateur du système d'alimentation auxiliaire AUX en générant les tensions V_{GS_ON} et V_{GS_OFF} nécessaires respectivement à la fermeture et à l'ouverture du transistor T1. A partir des tensions V_{GS_ON} et V_{GS_OFF}, les transistors Q11, Q21 appliquent la tension de grille V_{G} au transistor JFET pour le commander à l'ouverture ou à la fermeture.

Selon l'invention, le dispositif de commande comporte également un élément redresseur de tension connecté entre la sortie OUT1 du dispositif de commande et l'entrée in1 du convertisseur, en amont de la résistance du circuit de précharge Ri1. L'élément redresseur de tension peut être une diode D11 comme représenté sur la figure 2, un thyristor ou un transistor de type IGBT ou RBIGBT (pour "Reverse Blocking" IGBT). Le dispositif de commande comporte un élément de stockage d'énergie tel qu'un condensateur C11 connecté quant à lui entre la source du transistor T1 commandé et le point situé entre la sortie OUT1 du dispositif de commande et la diode D11. Par ailleurs, comme représenté en figure 2, le dispositif de commande peut également comporter une résistance R11 connectée entre la diode D11 et sa sortie OUT1. La résistance R11 présente une valeur importante par exemple de quelques kiloOhms. Le condensateur C11 est alors connecté d'une part à la source du transistor T1 et d'autre part au point situé entre la résistance R11 et la diode D11. Une résistance de grille R_{G1} est également connectée entre la sortie du dispositif de commande et la grille G du transistor T1. La résistance R11 peut être connectée sur la sortie du dispositif de commande en amont ou en aval de la résistance de grille R_{G1}. Le dispositif de commande comporte enfin une diode Zener D_{CL1} qui est pour sa part connectée entre la grille du transistor T1 et le potentiel positif du dispositif de commande. Cette diode Zener D_{CL1} permet de limiter la tension grille-source V_{GS1} et ainsi de protéger la jonction PN réalisée entre la grille et la source du transistor T1 commandé.

L'architecture du troisième bras de commutation portant les transistors T5 et T6 est identique à celle du premier bras de commutation représenté sur la figure 2. L'architecture du deuxième bras de commutation est également identique à l'exception du fait que les sorties des deux dispositifs de commande sont connectées via les résistances R13, R14 et les diodes D13, D14 à la première entrée in1 ou à la troisième entrée in3 du convertisseur et non à la deuxième entrée in2. Ceci est essentiellement lié au fait que la deuxième entrée ne comporte pas de circuit de précharge. Il serait tout à fait possible de placer un circuit de précharge sur la deuxième entrée comme sur les autres entrées du convertisseur. Dans cette configuration les sorties des dispositifs de commande des transistors T3, T4 du deuxième bras de commutation seraient alors connectées à la deuxième entrée in2 du convertisseur.

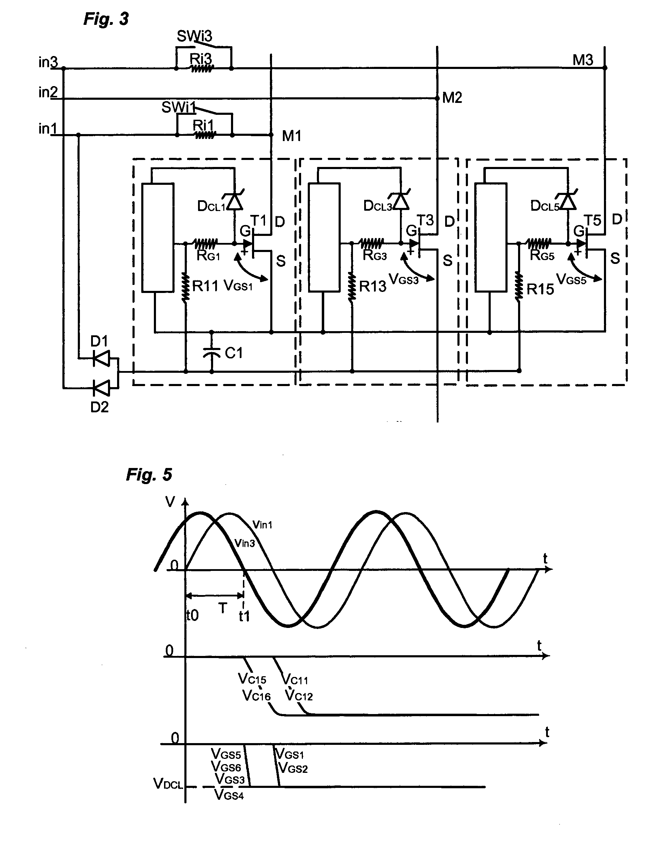

Pour les transistors bas des bras de commutation du redresseur, il est possible de simplifier les structures des dispositifs de commande employés comme représenté en figure 3. La simplification consiste à n'utiliser qu'un seul condensateur C1 pour les trois dispositifs de commande au lieu d'un condensateur différent C11, C13, C15 pour chaque dispositif de commande, ce condensateur C1 étant connecté entre les sources S des transistors T1, T3, T5 et les deux entrées in1 et in3. De même, seulement deux diodes D1 et D2 sont employées au lieu de trois diodes D11, D13, D15. Sur la figure 3, les parties comportant les composants connus des dispositifs de commande sont représentées par un simple rectangle.

Le principe de l'invention consiste à bloquer les transistors T1-T6 qui sont de type normalement fermé lors du démarrage du convertisseur ou lors d'un dysfonctionnement de l'alimentation auxiliaire AUX pour éviter notamment de mettre les entrées du convertisseur en court-circuit et de court-circuiter le condensateur de bus, empêchant la montée en tension du bus d'alimentation.

Le fonctionnement de l'invention est expliqué ci-dessous en liaison avec les courbes représentées en figure 5 et avec la représentation simplifiée de la figure 4.

Au démarrage, comme représenté sur la figure 4, comme tous les transistors sont passants, les entrées in1, in2, in3 du convertisseur sont en court-circuit et donc la ligne négative 11 et la ligne positive 10 du bus d'alimentation sont court-circuitées en un même point.

Dans un convertisseur triphasé, il est connu d'appliquer des tensions V1, V2, V3 entre les phases comme représenté en figure 4, entraînant l'apparition des tensions Vin1 et Vin3 sur les entrées in1 et in3, aux bornes des résistances de précharge Ri1, Ri3. Les deux tensions Vin1 et Vin3 sont des tensions sinusoïdales déphasées de π/3 comme représenté sur les premières courbes de la figure 5. De ce fait, ces deux tensions sont périodiquement négatives.

A t0, les tensions Vin1 et Vin3 sont par exemple toutes les deux positives et les diodes D11 à D16 sont donc bloquantes. A t1, après un certain délai T, la tension Vin3 devient négative. Les diodes D15 et D16 des dispositifs de commande CT5, CT6 deviennent passantes. Les condensateurs C15 et C16 sont chargés par la tension Vin3. Comme la tension Vin3 est négative, les tensions V_{C15} et V_{C16} aux bornes des condensateurs C15 et C16 sont également négatives. Au même moment, les jonctions grille-source des transistors T5 et T6 du troisième bras de commutation sont chargées avec une tension négative via les résistances R15 et R16. Lorsque les tensions grille-source V_{GS5} et V_{GS6} atteignent une valeur négative suffisante, les transistors T5 et T6 sont bloqués. Dans le dispositif de commande, comme les tensions grille-source V_{GS5} et V_{GS6} sont négatives, les diodes de blocage D_{b15}, D_{b16} deviennent bloquantes et empêchent un courant de fuite de passer hors du dispositif de commande.

De même, lorsque Vin1 devient négative, les diodes D11, D12 liées au premier bras de commutation deviennent passantes. Les condensateurs C11 et C12 se chargent donc négativement à partir de la tension Vin1. Les tensions V_{C11} et V_{C12} aux bornes des condensateurs C11 et C12 sont alors négatives. Dans le même temps, les jonctions grille-source des transistors T1 et T2 se chargent négativement via les résistances R11 et R12. Lorsque les tensions grille-source V_{GS1} et V_{GS2} atteignent un certain seuil négatif, les transistors T1 et T2 sont bloqués.

En ce qui concerne le deuxième bras de commutation, selon qu'il est connecté à la première entrée in1 ou la troisième entrée in3 du convertisseur, les tensions grille source V_{GS3}, V_{GS4} deviennent négatives en même temps que celles des transistors du premier bras de commutation ou en même temps que celles du troisième bras de commutation. Lorsque le seuil négatif est atteint pour ces tensions, les transistors T3 et T4 sont bloqués.

Lorsque tous les transistors T1-T6 du redresseur sont bloqués, le condensateur de bus Cbus peut être chargé via les diodes internes des transistors T1-T6. Une fois que le condensateur de bus Cbus est chargé, l'alimentation auxiliaire AUX a démarré et les dispositifs de commande CT1-CT6 des transistors peuvent alors fonctionner normalement pour commander à l'ouverture ou la fermeture les transistors du redresseur. Une fois que les interrupteurs SWi1 et SWi3 sont fermés, le redresseur peut fonctionner normalement.

Le fonctionnement du mode de réalisation de la figure 3 est identique en ce qui concerne chacun des transistors bas T1, T3, T5 du redresseur à celui décrit ci-dessus.

## Revendications

1. Convertisseur de puissance comportant :
- plusieurs entrées connectées d'une part à une source d'énergie et d'autre part à un redresseur, ledit redresseur étant connecté à un bus d'alimentation de puissance doté d'une ligne positive (10) et d'une ligne négative (11) et sur lequel est appliquée une tension continue (Vbus),
- un condensateur de bus (Cb), connecté en aval du redresseur entre la ligne positive (10) et la ligne négative (11) du bus d'alimentation,
- le redresseur comportant un bras de commutation connecté entre la ligne positive (10) et la ligne négative (11) du bus d'alimentation, le bras de commutation comportant au moins deux transistors (T1-T6) connectés en série, un point milieu de connexion (M1, M2, M3) situé entre les deux transistors du bras de commutation étant connecté à une entrée (in1, in3) du convertisseur, via un élément limiteur de courant (Rᵢ₁,Rᵢ₃);
- les transistors (T1-T6) étant de type à effet de champ normalement fermés et commandés chacun par un dispositif de commande de grille (CT1-CT6),
**caractérisé en ce que** chaque dispositif de commande de grille comporte :
- une sortie (OUT1) connectée à la grille (G) du transistor,
- un élément redresseur de tension (D1,D2; D11,D12) connecté entre la sortie du dispositif de commande et une entrée (in1, in3) du convertisseur, en amont de l'élément limiteur de courant (Rᵢ₁,Rᵢ₃);
- un condensateur (C11) connecté entre la source (S) du transistor et un point situé entre la sortie (OUT1) du dispositif de commande et l'élément redresseur de tension (D1,D2; D11,D12).

2. Convertisseur de puissance selon la revendication 1, **caractérisé en ce que** le dispositif de commande de grille (CT1-CT6) comporte une résistance (R11-R16) montée en série avec l'élément redresseur de tension.

3. Convertisseur de puissance selon la revendication 1 ou 2, **caractérisé en ce que** le dispositif de commande de grille comporte une résistance de grille (R_{G1}) connectée entre la grille (G) du transistor (T1-T6) et la sortie du dispositif de commande de grille.

4. Convertisseur de puissance selon l'une des revendications 1 à 3, **caractérisé en ce que** le dispositif de commande de grille comporte une diode Zener (D_{CL1}) connectée entre la grille (G) du transistor (T1-T6) et une borne positive du dispositif de commande.

5. Convertisseur de puissance selon l'une des revendications 1 à 4, **caractérisé en ce que** les transistors (T1-T6) sont de type JFET.

6. Convertisseur de puissance selon la revendication 5, **caractérisé en ce que** les transistors (T1-T6) sont fabriqués en carbure de silicium ou en nitrure de gallium.

7. Convertisseur de puissance selon l'une des revendications 1 à 6, **caractérisé en ce que** le convertisseur comporte un interrupteur (SWi1, SWi3) monté en parallèle de l'élément limiteur de courant.

8. Convertisseur de puissance selon l'une des revendications 1 à 7, **caractérisé en ce que** l'élément limiteur de courant est une résistance (Ri1, Ri3).

9. Convertisseur de puissance selon l'une des revendications 1 à 8, **caractérisé en ce que** l'élément redresseur de tension est une diode (D11).

## Patentansprüche

1. Leistungsumformer, der aufweist:
- mehrere Eingänge, die einerseits an eine Energiequelle und andererseits an einen Gleichrichter angeschlossen sind, wobei der Gleichrichter an einen Leistungsversorgungsbus angeschlossen ist, der mit einer positiven Leitung (10) und mit einer negativen Leitung (11) versehen ist und an den eine Gleichspannung (Vbus) angelegt wird,
- einen Buskondensator (Cb), der hinter dem Gleichrichter zwischen der positiven Leitung (10) und der negativen Leitung (11) des Versorgungsbusses angeschlossen ist,
- wobei der Gleichrichter einen zwischen der positiven Leitung (10) und der negativen Leitung (11) des Versorgungsbusses angeschlossenen Schaltarm aufweist, wobei der Schaltarm mindestens zwei in Reihe geschaltete Transistoren (T1-T6) aufweist, wobei ein Verbindungsmittelpunkt (M1, M2, M3), der sich zwischen den zwei Transistoren des Schaltarms befindet, an einen Eingang (in1, in3) des Umformers über ein Strombegrenzerelement (Ri1, Ri3) angeschlossen ist,
- wobei die Transistoren (T1-T6) von der Art normalerweise geschlossene Feldeffekttransistoren sind und je von einer Gate-Steuervorrichtung (CT1-CT6) gesteuert werden,
**dadurch gekennzeichnet, dass** jede Gate-Steuervorrichtung aufweist:
- einen an das Gate (G) des Transistors angeschlossenen Ausgang (OUT1),
- ein zwischen dem Ausgang der Steuervorrichtung und einem Eingang (in1, in3) des Umformers vor dem Strombegrenzerelement (Ri1, Ri3) angeschlossenes Spannungsgleichrichterelement (D1, D2; D11, D12),
- einen zwischen der Source (S) des Transistors und einem zwischen dem Ausgang (OUT1) der Steuervorrichtung und dem Spannungsgleichrichterelement (D1, D2; D11, D12) befindlichen Punkt angeschlossenen Kondensator (C11).

2. Leistungsumformer nach Anspruch 1, **dadurch gekennzeichnet, dass** die Gate-Steuervorrichtung (CT1-CT6) einen Widerstand (R11-R16) aufweist, der mit dem Spannungsgleichrichterelement in Reihe montiert ist.

3. Leistungsumformer nach Anspruch 1 oder 2, **dadurch gekennzeichnet, dass** die Gate-Steuervorrichtung einen Gate-Widerstand (R_{G1}) aufweist, der zwischen dem Gate (G) des Transistors (T1-T6) und dem Ausgang der Gate-Steuervorrichtung angeschlossen ist.

4. Leistungsumformer nach einem der Ansprüche 1 bis 3, **dadurch gekennzeichnet, dass** die Gate-Steuervorrichtung eine Zener-Diode (D_{CL1}) aufweist, die zwischen dem Gate (G) des Transistors (T1- T6) und einem positiven Pol der Steuervorrichtung angeschlossen ist.

5. Leistungsumformer nach einem der Ansprüche 1 bis 4, **dadurch gekennzeichnet**, die Transistoren (T1-T6) von der Art JFET sind.

6. Leistungsumformer nach Anspruch 5, **dadurch gekennzeichnet, dass** die Transistoren (T1-T6) aus Siliciumcarbid oder aus Galliumnitrid hergestellt sind.

7. Leistungsumformer nach einem der Ansprüche 1 bis 6, **dadurch gekennzeichnet, dass** der Wandler einen Unterbrecher (SWi1, SWi3) aufweist, der parallel zum Strombegrenzerelement montiert ist.

8. Leistungsumformer nach einem der Ansprüche 1 bis 7, **dadurch gekennzeichnet, dass** das Strombegrenzerelement ein Widerstand (Ri1, Ri3) ist.

9. Leistungsumformer nach einem der Ansprüche 1 bis 8, **dadurch gekennzeichnet, dass** das Spannungsgleichrichterelement eine Diode (D11) ist.

## Claims

1. Power converter comprising:
- several inputs connected on the one hand to an energy source and on the other hand to a rectifier, said rectifier being connected to a power supply bus provided with a positive line (10) and a negative line (11) and to which is applied a DC voltage (Vbus),
- a bus capacitor (Cb), connected downstream of the rectifier between the positive line (10) and the negative line (11) of the power supply bus,
- the rectifier comprising a switching leg connected between the positive line (10) and the negative line (11) of the power supply bus, the switching leg comprising at least two transistors (T1-T6) connected in series, a connection midpoint (M1, M2, M3) situated between the two transistors of the switching leg being connected to an input (in1, in3) of the converter, via a current limiting element (Ri1, Ri3),
- the transistors (T1-T6) being of the normally ON field-effect type and each controlled by a gate control device (CT1-CT6),
**characterized in that** each gate control device comprises:
- an output (OUT1) connected to the gate (G) of the transistor,
- a voltage rectifier element (D1, D2 ; D11, D12) connected between the output of the control device and an input (in1, in3) of the converter, upstream of the current limiting element (Ri1, Ri3),
- a capacitor (C11) connected between the source (S) of the transistor and a point situated between the output (OUT1) of the control device and the voltage rectifier element (D1, D2 ; D11, D12).

2. Power converter according to Claim 1, **characterized in that** the gate control device (CT1-CT6) comprises a resistor (R11-R16) mounted in series with the voltage rectifier element.

3. Power converter according to Claim 1 or 2, **characterized in that** the gate control device comprises a gate resistor (R_{G1}) connected between the gate (G) of the transistor (T1-T6) and the output of the gate control device.

4. Power converter according to one of Claims 1 to 3, **characterized in that** the gate control device comprises a Zener diode (D_{CL1}) connected between the gate (G) of the transistor (T1-T6) and a positive terminal of the control device.

5. Power converter according to one of Claims 1 to 4, **characterized in that** the transistors (T1-T6) are of JFET type.

6. Power converter according to Claim 5, **characterized in that** the transistors (T1-T6) are fabricated from silicon carbide or gallium nitride.

7. Power converter according to one of Claims 1 to 6, **characterized in that** the converter comprises a switch (SWi1, SWi3) mounted in parallel with the current limiter element.

8. Power converter according to one of Claims 1 to 7, **characterized in that** the current limiter element is a resistor (Ri1, Ri3).

9. Power converter according to one of Claims 1 to 8, **characterized in that** the voltage rectifier element is a diode (D11).
